# EUROPEAN PATENT SPECIFICATION

(11) **EP 0 742 135 B1**
(45) Date of publication and mention of the grant of the patent: **07.01.1999**
(21) Application number: 96303292.5
(22) Date of filing: 10.05.1996
(51) Int. Cl.: B62D 25/20, B62D 35/02

(54) **Vehicle undershielding arrangements**
Schutzschildanordnung für Fahrzeuge
Agencement de bouclier de protection pour véhicules

(30) Priority: 11.05.1995 GB 9509541
(43) Date of publication of application: 13.11.1996
(73) Proprietor: DRAFTEX INDUSTRIES LIMITED, Edinburgh EH2 3AP, Scotland (GB)
(72) Inventor: Deterre, Remi, F-44300 Nantes (FR); Kaelbel, Olivier, F-44000 Nantes (FR)
(74) Representative: Foster, David Martyn

(56) References cited:
- EP-A- 0 709 280
- CH-A- 220 080
- DE-A- 2 549 493
- DE-A- 3 308 117
- DE-A- 4 412 427
- US-A- 3 861 735

## Description

The invention relates to an undershield for a motor vehicle engine compartment, comprising a panel for attachment to the underside of the vehicle engine compartment and provided with an aperture through and extending part way across the undershield, the panel including a deflector on the underside of the undershield and mounted to extend along the leading edge of the aperture in the direction of forward vehicle motion.

Such an undershield is shown, for example in CH-A-220080. In this system, an axial fan is located in the engine compartment, the fan drawing air from above the engine and guiding the cooling air through the engine compartment and out through an orifice in the undershield. The orifice is protected from road debris by deflector means.

This known cooling system requires incorporation of additional moving parts in the engine compartment to achieve the required cooling. This means the manufacturing and assembly process requires additional steps. Additionally, the deflector means disclosed comprise a series of fins. These fins can be easily damaged by impact with road debris. It is an object of the present invention to overcome these problems.

Accordingly, the know system is characterised, in accordance with the invention, in that the deflector is deformable and normally extends downwardly of the undershield in a direction substantially perpendicular to the direction of forward motion whereby to cause a reduction in ambient pressure in the region of the aperture and thereby to cause air to be drawn out of the engine compartment by suction through the aperture.

Undershields for protecting the underside of a motor vehicle engine and embodying the invention will now be described by way of example only, with reference to the accompanying diagrammatic drawings in which:
Figure 1 is a longitudinal cross-section of one the undershields on line I-I of Figure 2; and
Figure 2 is a plan view of the undershield of Figure 1.

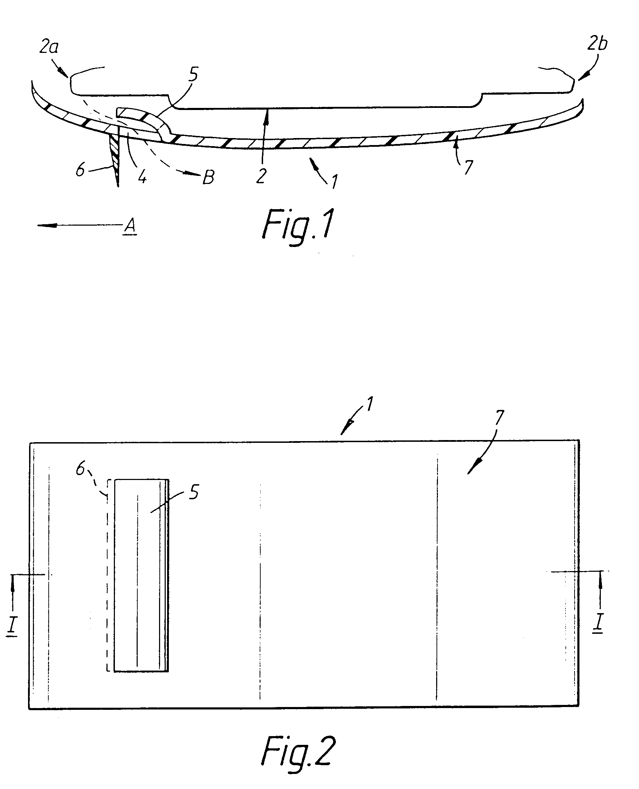

Figure 1 shows an undershield 1 which protects and shields the underside of a motor vehicle engine, generally shown at 2, from the road surface.

The undershield 1 is an arcuately formed panel 7 fixedly attached to the underside of the engine 2 extending from beneath the front of the engine 2a to the rear of the engine 2b. The undershield 1 is formed from thermoplastics material such as polypropylene.

The front portion of the undershield 1 is provided with a vent 4 to allow improved air circulation.

As shown, the undershield 1 is made of an arcuately formed panel 7. The underside of the panel 7 is provided with a deformable deflector 6 extending widthwise of the panel 7 and which runs alongside the leading edge (in the forward direction of the vehicle) of the vent 4. The top side of the panel 7 is provided with an integrally formed raised protective element 5 extending in the forward direction and acting so as to cover the vent 4. The deflector 6 and the protective element 5 together define protection for the vent 4 in the undershield 1.

When the vehicle is moving in the forward direction (arrow A), air flow under the vehicle is deflected by the deflector 6. This causes a reduction in pressure due to the Venturi effect in the region of the vent 4, causing the warm air in the engine compartment to be drawn out in the direction of arrow B thus cooling the engine.

The presence of the deflector 6 and the protective element 5 ensures that the engine is still protected from road debris and that contamination of the ground by fluids leaking from the engine is still prevented. However, possible over-heating of the engine compartment caused by the presence of the undershield is reduced by the vent 4.

The panel 7 may be formed by injection moulding from a thermoplastics material such as a standard type polypropylene but it will be appreciated that other plastics materials may be used. Subsequently, the deflector 6 may be over-moulded onto the panel 7. Instead of being over-moulded, however it can be formed by any other suitable process. For example, a process can be used by which the deflector from foamed material in the same mould as the panel 7, using a mould with a movable wall portion which is moved outwardly to cause the foaming to take place. As the deflector 6 must be deformable, it is formed from an elastomeric material such as a plastics or rubber material. This produces an undershield 1 resilient to shocks.

It will be appreciated that the deflector 6 can be adhesively attached to the panel 7 and need not be over-moulded onto the panel 7.

## Claims

1. An undershield (1) for a motor vehicle engine compartment, comprising a panel (7) for attachment to the underside of the vehicle engine compartment and provided with an aperture (4) through and extending part way across the undershield, the panel (7) includes a deflector (6) on the underside of the undershield (1) and mounted to extend along the leading edge of the aperture(4) in the direction of forward vehicle motion, characterised in that the deflector is deformable and normally extends downwardly of the undershield (1) in a direction substantially perpendicular to the direction of forward motion whereby to cause a reduction in ambient pressure in the region of the aperture (4) and thereby to cause air to be drawn out of the engine compartment by suction through the aperture.

2. An undershield (1) according to claim 1, characterised in that the aperture is unobstructed on the rearward side of the deflector (6).

3. An undershield (1) according to claim 1 or 2, characterised in that the panel (7) is formed by injection moulding.

4. An undershield (1) according to any preceding claim, characterised in that the deflector (6) is over-moulded onto the panel (7).

5. An undershield (1) according to claim 3, characterised in that the deflector (6) is adhesively attached to the panel.

6. An undershield (1) according to claim 3, characterised in that the panel (7) is formed from thermoplastics.

7. An undershield (1) according to claim 3, characterised in that the panel (7) is formed from polypropylene.

8. An undershield according to claim 4, characterised in that the deflector (6) is formed from an elastomer.

9. An undershield according to claim 4, characterised in that the deflector (6) is formed from rubber.

10. An undershield according to any preceding claim, characterised in that the panel (7) includes protector means (5) on the topside of the undershield (1) and mounted along the trailing edge of the aperture (4).

11. An undershield according to claim 10, characterised in that the protector means (5) extends in the forward direction and acts so as to parially cover the aperture (4).

## Patentansprüche

1. Motorunterschutz (1) für einen Kraftfahrzeugmotorraum mit einer Blende (7) zur Befestigung an der Unterseite des Fahrzeugmotorraumes und ausgestattet mit einer Öffnung (4), welche sich durch und teilweise über den Motorunterschutz erstreckt, wobei die Blende (7) ein Ablenkelement (6) auf der Unterseite des Motorunterschutzes (1) aufweist, welches derart angebracht ist, daß es sich entlang der Vorderkante der Öffnung (4) in der Richtung der Vorwärtsbewegung des Fahrzeuges erstreckt, dadurch gekennzeichnet, daß das Ablenkelement verformbar ist und sich normalerweise nach unten von dem Motorunterschutz (1) in einer im wesentlichen senkrechten Richtung zu der Richtung der Vorwärtsbewegung erstreckt, wodurch eine Verringerung des Umgebungsdruckes in dem Bereich der Öffnung (4) bewirkt wird und dadurch Luft durch Ansaugen durch die Öffnung aus dem Motorraum herausgesogen wird.

2. Motorunterschutz (1) gemäß Anspruch 1, dadurch gekennzeichnet, daß die Öffnung auf der rückwärtigen Seite des Ablenkelements (6) freiliegt.

3. Motorunterschutz (1) gemäß Anspruch 1 oder 2, dadurch gekennzeichnet, daß die Blende (7) durch Spritzgießen gebildet wird.

4. Motorunterschutz (1) gemäß irgendeinem der vorherigen Ansprüche, dadurch gekennzeichnet, daß das Ablenkelement (6) auf die Blende (7) übermodelliert wird.

5. Motorunterschutz (1) gemäß Anspruch 3, dadurch gekennzeichnet, daß das Ablenkelement (6) an der Blende angeklebt wird.

6. Motorunterschutz (1) gemäß Anspruch 3, dadurch gekennzeichnet, daß die Blende (7) aus Ihermoplast gebildet wird.

7. Motorunterschutz (1) gemäß Anspruch 3, dadurch gekennzeichnet, daß die Blende (7) aus Polypropylen gebildet wird.

8. Motorunterschutz gemäß Anspruch 4, dadurch gekennzeichnet, daß das Ablenkelement (6) aus einem Elastomer gebildet wird.

9. Motorunterschutz gemäß Anspruch 4, dadurch gekennzeichnet, daß das Ablenkelement (6) aus Gummi gebildet wird.

10. Motorunterschutz gemäß irgendeinem der vorherigen Ansprüche, dadurch gekennzeichnet, daß die Blende (7) eine Schutzvorrichtung (5) auf der Oberseite des Motorunterschutzes aufweist, welche entlang der Hinterkante der Öffnung (4) angebracht ist.

11. Motorunterschutz gemäß Anspruch 10, dadurch gekennzeichnet, daß sich die Schutzvorrichtung (5) in der Vorwärtsrichtung erstreckt und dafür eingerichtet ist, die Öffnung (4) teilweise abzudecken.

## Revendications

1. Un bouclier de protection (1) pour un compartiment moteur de véhicule automobile, comprenant un panneau (7) destiné à être fixé à la face inférieure du compartiment moteur de véhicule, et pourvu d'une ouverture (4) ménagée à travers et s'étendant en partie sur le bouclier de protection, le panneau (7) comprenant un déflecteur (6) sur la face inférieure du bouclier de protection (1) et monté de façon à s'étendre le long du bord avant de l'ouverture (4) dans la direction de déplacement vers l'avant du véhicule, caractérise en ce que le déflecteur est déformable et s'étend normalement vers le bas du bouclier de protection (1), dans une direction sensiblement perpendiculaire à la direction de déplacement vers l'avant, de manière à provoquer une réduction de lu pression ambiante dans la zone de l'ouverture (4) et à forcer de ce fait l'air à être extrait hors du compartiment moteur, par aspiration via l'ouverture.

2. Bouclier de protection (1) selon la revendication 1, caractérisé en ce que l'ouverture n'est pas obstruée sur le côté arrière du déflecteur (6).

3. Bouclier de protection (1) selon la revendication 1 ou 2, caractérisé en ce eue le panneau (7) est formé par moulage par injection.

4. Un bouclier de protection (1) selon l'une quelconque des revendications précédentes, caractérisé en ce que le déflecteur (6) est surmoulé sur le panneau (7).

5. Un bouclier de protection (1) selon la revendication 3, caractérisé en ce que déflecteur (6) est fixé par adhérence au panneau.

6. Un bouclier de protection (1) selon la revendication 3, caractérisé en ce que le panneau (7) est formé en matière thermoplastique.

7. Un bouclier de protection (1) selon la revendication 3, caractérisé en ce que le panneau (7) est formé en polypropylène.

8. Un bouclier de protection selon la revendication 4, caractérisé en ce que le déflecteur (6) est formé en élastomère.

9. Un bouclier de protection selon la revendication 4, caractérisé en ce que le déflecteur (6,) est formé en, caoutchouc.

10. Un bouclier de protection selon l'une quelconque des revendications précédentes, caractérisé en ce que le panneau (7) comprend des moyens protecteurs (5) disposés sur la face supérieure du bouclier de protection (1) et montés le long du bord arrière de l'ouverture (4).

11. Un bouclier de protection selon la revendication 10, caractérisé en ce que les moyens protecteurs (5) s'étendent dans lé direction orientée vers l'avant et servent à recouvrir partiellement l'ouverture (4).
